(19) Europäisches Patentamt
European Patent Office
Office européen des brevets

(11) **EP 4 215 959 A1**

(12) **EUROPEAN PATENT APPLICATION**

(43) Date of publication:
**26.07.2023  Bulletin 2023/30**

(21) Application number: **23152625.2**

(22) Date of filing: **20.01.2023**

(51) International Patent Classification (IPC):
***G02B 5/30*** *(2006.01)*

(52) Cooperative Patent Classification (CPC):
**G02B 5/305; C09J 7/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.01.2022  JP 2022007668**
**15.11.2022  JP 2022182709**

(71) Applicant: **Nitto Denko Corporation**
**Ibaraki-shi, Osaka 567-8680 (JP)**

(72) Inventors:
• **TOYOTA, Yuji**
**Osaka, 567-8680 (JP)**
• **YAEGASHI, Masahiro**
**Osaka, 567-8680 (JP)**

(74) Representative: **Hoffmann Eitle**
**Patent- und Rechtsanwälte PartmbB**
**Arabellastraße 30**
**81925 München (DE)**

(54) **POLARIZING FILM LAMINATE**

(57)    Provided is a polarizing film laminate that is reworkable and excellent in bonding property over a long period of time. The polarizing film laminate includes: a polarizing plate including a polarizer; a first pressure-sensitive adhesive layer; a supporting substrate; and a second pressure-sensitive adhesive layer, which are laminated in the stated order, wherein the second pressure-sensitive adhesive layer surface of the polarizing film laminate has a pressure-sensitive adhesive strength to glass of 1.0 N/25 mm or more at a peel angle of 90° and a peel rate of 300 mm/min.

**Description**

BACKGROUND OF THE INVENTION

This application claims priority under 35 U.S.C. Section 119 to Japanese Patent Application No. 2022-007668 filed on January 21, 2022 and Japanese Patent Application No. 2022-182709 filed on November 15, 2022 which are herein incorporated by reference.

1. Field of the Invention

The present invention relates to a polarizing film laminate and a barrier having bonded thereto the polarizing film laminate.

2. Description of the Related Art

In recent years, for the purpose of achieving a bright and open working space or living space, there has been performed design involving, for example, increasing a ratio of a window in a wall or door for dividing the space or making a whole surface of the wall or the door a window.

However, a case in which an image display apparatus, such as a personal computer, a television, or a monitor, is placed in such space as described above is not preferred in terms of information security and privacy because its displayed content may be observed from the outside.

In view of the foregoing, there is a proposal of a technology involving bonding a polarizing plate with a pressure-sensitive adhesive layer to a window so that an absorption axis direction thereof is parallel to a vibration direction of linearly polarized light to be emitted from a display screen of the image display apparatus, to thereby prevent its displayed content from being observed from the outside (for example, Kurogane Kosakusho Ltd., General Catalog [2020 edition, Vol. 45, page 110]).

However, a pressure-sensitive adhesive to be used for the related-art polarizing plate with a pressure-sensitive adhesive layer is designed to be used for an image display apparatus, and hence the related-art polarizing plate with a pressure-sensitive adhesive layer is difficult to peel off once bonded. Accordingly, there is a problem in that its reworkability is insufficient. In response to the problem, the inventors of the present invention have attempted to improve the reworkability by improving the peelability of the pressure-sensitive adhesive layer (making the pressure-sensitive adhesive layer lightly peelable), and as a result, have found a problem in that floating and peeling may occur over time.

SUMMARY OF THE INVENTION

The present invention has been made in order to solve the above-mentioned problem, and a primary obj ect of the present invention is to provide a polarizing film laminate that is reworkable and excellent in bonding property over a long period of time.

According to at least one embodiment of the present invention, there is provided a polarizing film laminate, including: a polarizing plate including a polarizer; a first pressure-sensitive adhesive layer; a supporting substrate; and a second pressure-sensitive adhesive layer, which are laminated in the stated order, wherein a second pressure-sensitive adhesive layer surface of the polarizing film laminate has a pressure-sensitive adhesive strength to glass of 1.0 N/25 mm or more at a peel angle of 90° and a peel rate of 300 mm/min.

In at least one embodiment of the present invention, the supporting substrate has a water absorption ratio of 5.0% or less.

In at least one embodiment of the present invention, when water is applied to the second pressure-sensitive adhesive layer surface and/or a surface of a glass plate serving as an adherend, and the polarizing film laminate is pressure-bonded to the glass plate while the water interposed between the second pressure-sensitive adhesive layer and the glass plate is pushed out of an interface therebetween, the second pressure-sensitive adhesive layer surface has a pressure-sensitive adhesive strength to glass of from 0.2 N/25 mm to 5.0 N/25 mm at a peel angle of 90° and a peel rate of 300 mm/min after 4 days from the pressure-bonding.

In at least one embodiment of the present invention, the polarizing plate further includes a protective layer arranged on at least one side of the polarizer.

In at least one embodiment of the present invention, the supporting substrate includes a substrate main body and a functional layer arranged on at least one side thereof.

In at least one embodiment of the present invention, the functional layer is at least one kind of layer selected from an antistatic layer and an antifouling layer.

In at least one embodiment of the present invention, a thickness from the polarizing plate to the second pressure-sensitive adhesive layer is from 50 um to 500 um.

In at least one embodiment of the present invention, the polarizing film laminate further includes a release liner laminated on an opposite side of the second pressure-sensitive adhesive layer to a side on which the supporting substrate is arranged.

According to at least one embodiment of the present invention, there is provided a transparent barrier configured to divide a space having placed therein an image display apparatus configured to emit linearly polarized light from a display screen, the barrier having bonded thereto the polarizing film laminate via the second pressure-sensitive adhesive layer so that an absorption axis of the polarizer is substantially parallel to a vibration direction of the linearly polarized light to be emitted by the image display apparatus .

In at least one embodiment of the present invention, the barrier is a window, a wall, a door, or a partition.

BRIEF DESCRIPTION OF THE DRAWINGS

FIG. 1A is a schematic sectional view of a polarizing film laminate according to at least one embodiment of the present invention.

FIG. **1B** is a schematic sectional view of a polarizing film laminate according to at least one embodiment of the present invention.

FIG. **2A** is a schematic sectional view of an example of a supporting substrate that may be used in at least one embodiment of the present invention.

FIG. **2B** is a schematic sectional view of an example of the supporting substrate that may be used in at least one embodiment of the present invention.

FIG. **2C** is a schematic sectional view of an example of the supporting substrate that may be used in at least one embodiment of the present invention.

FIG. **3** is a schematic view for illustrating an example of a barrier having applied thereto the polarizing film laminate according to at least one embodiment of the present invention.

DESCRIPTION OF THE EMBODIMENTS

Preferred embodiments of the present invention are described below. However, the present invention is not limited to these embodiments.

A. Polarizing Film Laminate

A polarizing film laminate according to at least one embodiment of the present invention has a configuration in which a polarizing plate including a polarizer, a first pressure-sensitive adhesive layer, a supporting substrate, and a second pressure-sensitive adhesive layer are laminated in the stated order.

A-1. Overall Configuration of Polarizing Film Laminate

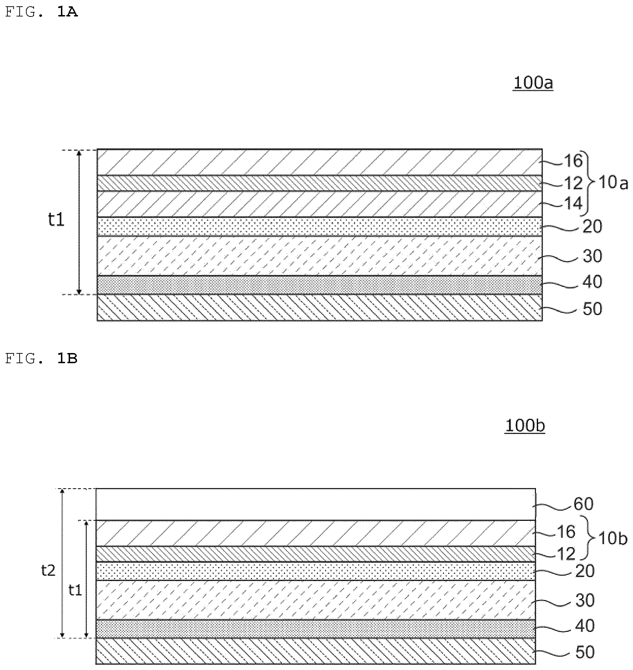

FIG. **1A** is a schematic sectional view of a polarizing film laminate according to at least one embodiment of the present invention. A polarizing film laminate **100a** has a configuration in which a polarizing plate **10a,** a first pressure-sensitive adhesive layer **20,** a supporting substrate **30,** and a second pressure-sensitive adhesive layer **40** are laminated in the stated order, and can be bonded to a transparent member such as a windowpane via the second pressure-sensitive adhesive layer **40.** Further, in the polarizing film laminate **100a,** a release liner **50** is laminated on (temporarily bonded to) the surface of the second pressure-sensitive adhesive layer **40** on the opposite side to the side on which the supporting substrate **30** is arranged. The release liner **50** protects the second pressure-sensitive adhesive layer **40** by being temporarily bonded until the polarizing film laminate **100a** is used. A surface protective film (not shown) may be temporarily bonded to the surface of the polarizing plate **10a** on the opposite side to the side on which the first pressure-sensitive adhesive layer **20** is arranged, until the polarizing film laminate **100a** is used.

FIG. **1B** is a schematic sectional view of a polarizing film laminate according to at least one embodiment of the present invention. A polarizing film laminate **100b** has a configuration in which a protective substrate **60,** a polarizing plate **10b,** the first pressure-sensitive adhesive layer **20,** the supporting substrate **30,** and the second pressure-sensitive adhesive layer **40** are laminated in the stated order, and can be bonded to a transparent member such as a windowpane via the second pressure-sensitive adhesive layer **40.** Further, the release liner **50** is laminated on (temporarily bonded to) the surface of the second pressure-sensitive adhesive layer **40** on the opposite side to the side on which the supporting substrate **30** is arranged. The arrangement of the protective substrate **60** on the outside of the polarizing plate (opposite side to the side on which the first pressure-sensitive adhesive layer is arranged) can impart scratch-resisting performance, scattering-preventing performance, non-combustible performance, and the like to the polarizing film laminate. The protective substrate **60** is bonded to the polarizing plate **10b** via any appropriate adhesion layer (adhesive layer or pressure-sensitive adhesive layer). A surface protective film (not shown) may be temporarily bonded to the surface of the protective substrate **60** on the opposite side to the side on which the polarizing plate **10b** is arranged, until the polarizing film laminate **100b** is used.

A total thickness (t1) from the polarizing plate to the second pressure-sensitive adhesive layer of the polarizing film laminate is preferably from 50 um to 500 $\mu$m, more preferably from 100 um to 250 um. With such thickness, workability is satisfactory in bonding, peeling, and the like. In addition, when the polarizing film laminate includes the protective substrate, a total thickness (t2) from the protective substrate to the second pressure-sensitive adhesive layer of the polarizing film laminate is preferably from 50 um to 2.5 mm, more preferably from 100 um to 2.0 mm. With such thickness, there can be obtained a polarizing film laminate having scratch-resisting performance, scattering-preventing performance, non-combustible performance, and the like without the impairment of the workability.

The second pressure-sensitive adhesive layer surface of the polarizing film laminate has a pressure-sensitive adhesive strength to glass of typically 1.0 N/25 mm or more, preferably 2.0 N/25 mm or more, more preferably 2.5 N/25 mm or more. The pressure-sensitive adhesive strength to glass of the second pressure-sensitive adhesive layer surface of the polarizing film laminate may be, for example, 10 N/25 mm or less, 9.0 N/25 mm or less, or 6.0 N/25 mm or less. When the pressure-sensitive adhesive strength to glass falls within the above-mentioned ranges, reworkability and a bonding property over time can both be achieved. Herein, the pressure-sensitive adhesive strength to glass is measured at a peel angle of 90° and a peel rate of 300 mm/min. In addition, herein, unless otherwise stated, the pressure-sensitive adhesive strength to glass is a value measured in conformity with JIS Z0237, and is a value measured after 30 minutes from direct bonding of a measurement sample to an adherend without water interposed therebetween (dry attachment).

The single layer transmittance of the polarizing film laminate (in a state in which the release liner has been peeled off) is preferably 30% or more, more preferably from 35% to 45%, and is preferably from 35% to 43% in terms of practicality. When the single layer transmittance falls within such ranges, a more open space can be achieved.

The constituent elements of the polarizing film laminate are described in more detail below.

A-2. Polarizing Plate

The polarizing plate includes a polarizer. The polarizing plate may further include a protective layer arranged on one side, or each of both sides, of the polarizer as required. For example, the polarizing plate **10a** illustrated in FIG. **1A** includes a polarizer **12,** an inner protective layer **14** arranged on the first pressure-sensitive adhesive layer **20** side of the polarizer **12,** and an outer protective layer **16** arranged on the opposite side of the polarizer **12** to the side on which the first pressure-sensitive adhesive layer **20** is arranged. Meanwhile, the polarizing plate **10b** illustrated in FIG. **1B** has a configuration including the polarizer **12** and the outer protective layer **16** arranged on the opposite side of the polarizer **12** to the side on which the first pressure-sensitive adhesive layer **20** is arranged, with the omission of the inner protective layer. The polarizing plate may have a configuration (not shown) including the polarizer and the inner protective layer, with the omission of the outer protective layer.

A-2-1. Polarizer

The polarizer **12** is typically formed from a polyvinyl alcohol-based resin film containing a dichroic substance (e.g., iodine) . The polarizer may be formed from a single-layer resin film, or may be produced by using a laminate of two or more layers.

Specific examples of the polarizer formed from a single-layer resin film include: a polarizer obtained by subjecting a hydrophilic polymer film, such as a polyvinyl alcohol (PVA)-based film, a partially formalized PVA-based film, or an ethylene-vinyl acetate copolymer-based partially saponified film, to dyeing treatment with a dichroic substance, such as iodine or a dichroic dye, and stretching treatment; and a polyene-based alignment film, such as a dehydration-treated product of PVA or a dehydrochlorination-treated product of polyvinyl chloride. A polarizer obtained by dyeing the PVA-based film with iodine and uniaxially stretching the resultant is preferably used because the polarizer is excellent in optical characteristics.

The dyeing with iodine is performed by, for example, immersing the PVA-based film in an aqueous solution of iodine. The stretching ratio of the uniaxial stretching is preferably from 3 times to 7 times . The stretching may be performed after the dyeing treatment, or may be performed while the dyeing is performed. In addition, the dyeing may be performed after the stretching has been performed. The PVA-based film is subjected to swelling treatment, cross-linking treatment, washing treatment, drying treatment, or the like as required. For example, when the PVA-based film is immersed in water to be washed with water before the dyeing, contamination or an antiblocking agent on the surface of the PVA-based film can be washed off. In addition, the PVA-based film is swollen and hence dyeing unevenness or the like can be prevented.

A specific example of the polarizer obtained by using a laminate is a polarizer obtained by using a laminate of a resin substrate and a PVA-based resin layer (PVA-based resin film) laminated on the resin substrate or a laminate of a resin substrate and a PVA-based resin layer formed on the resin substrate through application. The polarizer obtained by using the laminate of the resin substrate and the PVA-based resin layer formed on the resin substrate through application may be produced, for example, by: applying a PVA-based resin solution to the resin substrate; drying the solution to form the PVA-based resin layer on the resin substrate, to thereby provide the laminate of the resin substrate and the PVA-based resin layer; and stretching and dyeing the laminate to turn the PVA-based resin layer into the polarizer. In this embodiment, the stretching typically includes stretching of the laminate under a state in which the laminate is immersed in an aqueous solution of boric acid. Further, the stretching may further include in-air stretching of the laminate at high temperature (e.g., 95°C or more) before the stretching in the aqueous solution of boric acid as required. The resultant laminate of the resin substrate and the polarizer may be used as it is (i.e., the resin substrate may be used as a protective layer for the polarizer). Alternatively, a product obtained as described below may be used: the resin substrate is peeled from the laminate of the resin substrate and the polarizer, and any appropriate protective layer in accordance with purposes is laminated on the peeling surface. Details about such method of producing the polarizer are described in, for example, Japanese Patent Application Laid-open No. 2012-73580, the description of which is incorporated herein by reference in its entirety.

The thickness of the polarizer is, for example, 30 $\mu$m or less, preferably 15 um or less, more preferably from 1 um to 12 $\mu$m, still more preferably from 2 um to 10 $\mu$m, particularly preferably from 2 um to 8 um. A reduction in thickness of the polarizer can suppress a dimensional change over time at the time of bonding attachment to an adherend or thereafter, and hence can provide, for example, the following effects: the workability becomes satisfactory; and floating and peeling can be prevented.

The polarizer preferably shows absorption dichroism at any wavelength in the wavelength range of from 380 nm to 780 nm. The single layer transmittance of the polarizer is preferably from 38.6% to 46.0%, more preferably from 40.0% to 43.0% or from 43.0% to 46.0%. The polarization degree of the polarizer is preferably 97.0% or more, more preferably 99.0% or more, still more preferably 99.9% or more.

A-2-2. Protective Layers

The inner protective layer **14** and the outer protective layer **16** may each be formed of any appropriate film as long as the film can function as a protective layer for a polarizer. As a material serving as a main component of the film, there are specifically given, for example, cellulose-based resins such as triacetylcellulose (TAC), and transparent resins, such as polyester-based, polyvinyl alcohol-based, polycarbonate-based, polyamide-based, polyimide-based, polyether sulfone-based, polysulfone-based, polystyrene-based, polynorbornene-based, polyolefin-based, (meth)acrylic, and acetate-based resins. There are also given, for example, thermosetting resins or UV-curable resins, such as (meth)acrylic, urethane-based, (meth)acrylic urethane-based, epoxy-based, and silicone-based resins. There are also given, for example, glassy polymers such as a siloxane-based polymer. In addition, a polymer film described in Japanese Patent Application Laid-open No. 2001-343529 (WO 01/37007 A1) may be used. For example, a resin composition containing a thermoplastic resin having a substituted or unsubstituted imide group on a side chain thereof, and a thermoplastic resin having a substituted or unsubstituted phenyl group and a nitrile group on side chains thereof may be used as a material for the film, and the composition is, for example, a resin composition containing an alternating copolymer formed of isobutene and N-methylmaleimide, and an acrylonitrile-styrene copolymer. The polymer film may be, for example, an extrudate of the resin composition.

It is preferred that at least one of the inner protective layer and the outer protective layer be optically isotropic. Specifically, when the polarizing film laminate is bonded to the outer surface of a barrier for dividing a space having placed therein an image display apparatus (outside of the space), it is preferred that the inner protective layer be optically isotropic. In addition, when the polarizing film laminate is bonded to the inner surface of a barrier for dividing a space having placed therein an image display apparatus (inside of the space), it is preferred that the outer protective layer be optically isotropic. The phrase "optically isotropic" as used herein refers to having an in-plane retardation Re(550) of from 0 nm to 10 nm and a thickness direction retardation Rth(550) of from -10 nm to +10 nm. The "Re(550)" is an in-plane retardation measured at 23°C with light having a wavelength of 550 nm, and is determined by the equation: $Re=(nx-ny)xd$. In addition, the "Rth(550) " is a thickness direction retardation measured at 23°C with light having a wavelength of 550 nm, and is determined by the equation: $Rth=(nx-nz)\times d$. In the equations, "nx" represents a refractive index in a direction in which an in-plane refractive index becomes maximum (i.e., a slow axis direction), "ny" represents a refractive index in a direction perpendicular to the slow axis in a plane (i.e., a fast axis direction), "nz" represents a thickness direction refractive index, and "d" represents the thickness (nm) of the layer (film).

A hard coat layer may be arranged as required on the outer surface of the outer protective layer (i.e., the surface thereof on the opposite side to the polarizer side). Specific examples of a material for forming the hard coat layer include a thermosetting resin, a thermoplastic resin, an active energy ray-curable resin (e.g., a UV-curable resin or an electron beam-curable resin), and a two-component resin. Of those, a UV-curable resin is preferred. This is because the hard coat layer can be efficiently formed by an easy processing operation.

The thickness of the hard coat layer is preferably from 1 um to 20 $\mu$m, more preferably from 2 um to 15 $\mu$m.

The thickness of the inner protective layer and the thickness of the outer protective layer (when the hard coat layer is arranged, a total thickness including the thickness of the hard coat layer) are each preferably from 10 um to 250 $\mu$m, more preferably from 20 um to 150 $\mu$m, still more preferably from 25 um to 100 $\mu$m, even still more preferably from 25 um to 50 $\mu$m.

A-3. Supporting Substrate

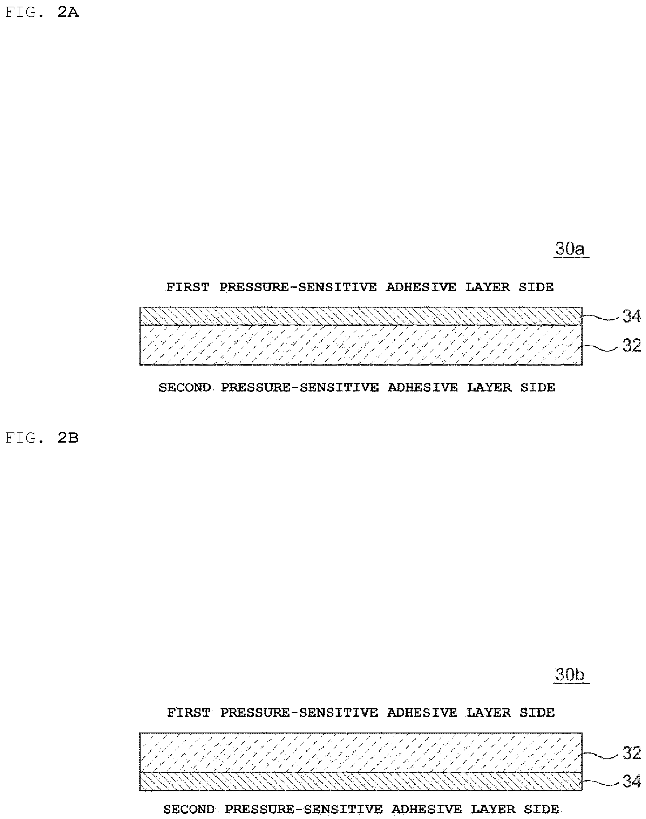

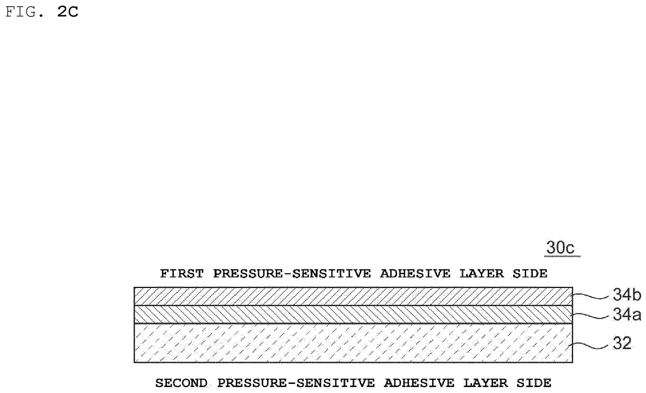

The supporting substrate 30 includes a substrate main body formed of a resin film. The supporting substrate may be formed only of the substrate main body, but may further include a functional layer on one side, or each of both sides, of the substrate main body as required. For example, FIG. 2A to FIG. 2C are each a schematic sectional view of an example of the supporting substrate that may be used in at least one embodiment of the present invention. A supporting substrate 30a illustrated in FIG. 2A includes a substrate main body 32 and a functional layer 34 arranged on the first pressure-sensitive adhesive layer side of the substrate main body 32. A supporting substrate 30b illustrated in FIG. 2B includes the substrate main body 32 and the functional layer 34 arranged on the second pressure-sensitive adhesive layer side of the substrate main body 32. A supporting substrate 30c illustrated in FIG. 2C includes the substrate main body 32, and a functional layer 34a and a functional layer 34b, which are arranged in the stated order on the first pressure-sensitive adhesive layer side of the substrate main body 32.

The supporting substrate satisfactorily supports the polarizing plate when the polarizing film laminate is bonded to an adherend and when the polarizing film laminate is temporarily peeled from the adherend for reworking. In addition, the polarizing plate may expand or contract depending on the temperature and/or humidity of a surrounding environment to undergo a dimensional change, and hence when the polarizing plate is bonded to the adherend via the first pressure-sensitive adhesive layer without the arrangement of the second pressure-sensitive adhesive layer and the supporting substrate, the first pressure-sensitive adhesive layer alone cannot completely absorb the dimensional change of the polarizing plate, resulting in curling or floating and peeling in the polarizing film laminate in some cases. In contrast, when the second pressure-sensitive adhesive layer and the supporting substrate are arranged, the curling or the floating and peeling can be suppressed. In addition, the polarizing plate is relatively liable to be torn, and hence requires careful peeling work when reworked, and moreover, may be torn even when the peeling work is carefully performed. In this regard, when the supporting substrate is arranged via the first pressure-sensitive adhesive layer, and the polarizing plate is bonded to the adherend via the second pressure-sensitive adhesive layer, the tearing can be prevented, and at the same time, the peeling work can be simply performed. Such effect of the supporting substrate can be particularly suitably obtained when a polarizing plate having no inner protective layer is used.

The water absorption ratio of the supporting substrate is preferably 5.0% or less, more preferably 4.5% or less, still more preferably 4.0% or less (e.g., 1.5% or less or 1.0% or less) . When the water absorption ratio falls within the ranges, the above-mentioned effect can be suitably obtained. The water absorption ratio may be determined in conformity with ASTM D570 (24 h-3.18 mm thickness).

A-3-1. Substrate Main Body

Any appropriate resin film may be used as the substrate main body as long as the polarizing plate can be supported. Examples of the resin film for forming the substrate main body include a polyester-based resin film, a cy-clooleofin-based resin film, an acrylic resin film, a cellulose ester-based resin film, a cellulose-based resin film, a polyester carbonate-based resin film, an olefin-based resin film, a polyurethane-based resin film, a polycarbonate-based resin film, and a polyvinyl acetal-based resin film. Of those, a polyester-based resin film, an acrylic resin film, or a polycarbonate-based resin film is preferred. Those resins may be used alone, or may be used in combination thereof depending on desired characteristics.

Examples of a polyester-based resin in the polyester-based resin film include polyethylene terephthalate, polyethylene naphthalate, polybutylene naphthalate, and polytrimethylene terephthalate. The polyester-based resin is preferably, for example, polyethylene terephthalate or polyethylene naphthalate, and is more preferably, for example, polyethylene terephthalate.

Examples of an acrylic resin in the acrylic resin film include a poly(meth)acrylic acid ester such as polymethyl methacrylate, a methyl methacrylate-(meth)acrylic acid copolymer, a methyl methacrylate-(meth)acrylic acid ester copolymer, a methyl methacrylate-acrylic acid ester-(meth)acrylic acid copolymer, a methyl (meth)acrylate-styrene copolymer (e.g., an MS resin), and a polymer having an alicyclic hydrocarbon group (e.g., a methyl methacrylate-cyclohexyl methacrylate copolymer or a methyl methacrylate-norbornyl (meth)acrylate copolymer). The acrylic resin may have an acid anhydride group, such as glutaric anhydride or succinic anhydride, as a structural unit. For example, when maleic anhydride is used as a copolymerizable component, an acrylic polymer having a succinic anhydride structure is obtained. Herein, the "(meth)acrylic" refers to "acrylic" and/or "methacrylic". The acrylic resin encompasses a resin containing acrylic acid or a derivative thereof as a constituent monomer component, and a resin containing methacrylic acid or a derivative thereof as a constituent monomer component.

Aromatic polycarbonate is preferably used as a polycarbonate-based resin in the polycarbonate-based resin film. The aromatic polycarbonate may be typically obtained through a reaction between a carbonate precursor and an aromatic dihydric phenol compound. Specific examples of the carbonate precursor include phosgene, bischloroformates of dihydric phenols, diphenyl carbonate, di-p-tolyl carbonate, phenyl-p-tolyl carbonate, di-p-chlorophenyl carbonate, and dinaphthyl carbonate. Of those, phosgene and diphenyl carbonate are preferred. Specific examples of the aromatic dihydric phenol compound include 2,2-bis(4-hydroxyphenyl)propane, 2,2-bis(4-hydroxy-3,5-dimethylphenyl)propane, bis(4-hydroxyphenyl)methane, 1,1-bis(4-hydroxyphenyl)ethane, 2,2-bis(4-hydroxyphenyl)butane, 2,2-bis(4-hydroxy-3,5-dimethylphenyl)butane, 2,2-bis(4-hydroxy-3,5-dipropylphenyl)propane, 1,1-bis(4-hydroxyphenyl)cyclohexane, and 1,1-bis(4-hydroxyphenyl)-3,3,5-trimethylcyclohexane. Those compounds may be used alone or in combination thereof. Of those, 2,2-bis(4-hydroxyphenyl)propane, 1,1-bis(4-hydroxyphenyl)cyclohexane, and 1,1-bis(4-hydroxyphenyl)-3,3,5-trimethylcyclohexane are preferably used. In particular, 2,2-bis(4-hydroxyphenyl)propane and 1,1-bis(4-hydroxyphenyl)-3,3,5-trimethylcyclohexane are preferably used in combination thereof.

The thickness of the substrate main body is preferably from 5 um to 250 $\mu$m, more preferably from 10 um to 150 um, still more preferably from 20 um to 100 $\mu$m.

The substrate main body may be subjected to surface treatment such as corona treatment or the application of a silane coupling agent or the like as required.

A-3-2. Functional Layer

Examples of the functional layer include an antistatic layer, an antifouling layer, a printed layer, and an easy-adhesion layer. The functional layers may be arranged alone or in combination thereof. For example, the functional layer **34** illustrated in FIG. **2A** may be preferably an antistatic layer, an antifouling layer, or a printed layer, more preferably an antistatic layer. In addition, for example, the functional layer **34** illustrated in FIG. **2B** may be preferably an antistatic layer. In addition, for example, the functional layer **34a** illustrated in FIG. **2C** is preferably an antistatic layer or a printed layer, and the functional layer **34b** is preferably an antifouling layer.

The antistatic layer typically contains a conductive material and a binder resin. Any appropriate conductive material may be used as the conductive material. A conductive polymer is preferably used. Examples of the conductive polymer include a polythiophene-based polymer, a polyacetylene-based polymer, a polydiacetylene-based polymer, a polyyne-based polymer, a polyphenylene-based polymer, a polynaphthalene-based polymer, a polyfluorene-based polymer, a polyanthracene-based polymer, a polypyrene-based polymer, a polyazulene-based polymer, a polypyrrole-based polymer, a polyfuran-based polymer, a polyselenophene-based polymer, a polyisothianaphthene-based polymer, a polyoxadiazole-based polymer, a polyaniline-based polymer, a polythiazyl-based polymer, a polyphenylene vinylene-based polymer, a polythienylene vinylene-based polymer, a polyacene-based polymer, a polyphenanthrene-based polymer, and a polyperinaphthalene-based polymer. Those polymers are used alone or in combination thereof. A polyurethane-based resin is preferably used as the binder resin. When the polyurethane-based resin is used, an antistatic layer having both of flexibility and excellent adhesiveness can be arranged.

The antifouling layer preferably contains a fluorine-containing compound. Of the fluorine-containing compounds, a fluorine-based polymer containing a perfluoropolyether skeleton is preferred because of being excellent in water repellency and capable of exhibiting a high antifouling property. From the viewpoint of enhancing the antifouling property, perfluoropolyether having such a main chain structure as to be capable of forming a rigid row is particularly preferred. A structural unit of the main chain skeleton of the perfluoropolyether is preferably a perfluoroalkylene oxide having 1 to 4 carbon atoms that may be branched, and examples thereof include perfluoromethylene oxide ($-CF_2O-$), perfluoroethylene oxide ($-CF_2CF_2O-$), perfluoropropylene oxide ($-CF_2CF_2CF_2O-$), and perfluoroisopropylene oxide ($-CF(CF_3)CF_2O-$).

The printed layer may be a design layer provided with a predetermined design, or may be a solid-colored layer. The printed layer may be formed by applying any appropriate ink or paint. The ink or paint to be used typically contains a binder, a colorant, a solvent, and any appropriate additive that may be used as required. Examples of the binder include a chlorinated polyolefin (e.g., chlorinated polyethylene or chlorinated polypropylene), a polyester-based resin, a urethane-based resin, an acrylic resin, a vinyl acetate resin, a vinyl chloride-vinyl acetate copolymer, and a cellulose-based resin.

The binder resins may be used alone or in combination thereof. Any appropriate colorant may be used as the colorant depending on purposes. Specific examples of the colorant include: inorganic pigments, such as titanium white, zinc oxide, carbon black, iron black, red iron oxide, chrome vermilion, ultramarine blue, cobalt blue, yellow lead, and titanium yellow; organic pigments or dyes, such as phthalocyanine blue, indanthrene blue, isoindolinone yellow, benzidine yellow, quinacridone red, polyazo red, perylene red, and aniline black; metal pigments each formed of scale-like foil pieces of aluminum, brass, or the like; and pearlescent pigments (pearl pigments) each formed of scale-like foil pieces of titanium dioxide-coated mica, basic lead carbonate, or the like.

The thickness of the functional layer may be appropriately set depending on, for example, purposes and applications. The thickness of each functional layer is, for example, from 0.1 um to 2 $\mu$m, preferably from 0.1 um to 1.5 $\mu$m.

A-4. First Pressure-sensitive Adhesive Layer

The first pressure-sensitive adhesive layer 20 has a pressure-sensitive adhesive strength to glass of preferably from 3.0 N/25 mm to 20 N/25 mm, more preferably from 4.0 N/25 mm to 15 N/25 mm, still more preferably from 5.0 N/25 mm to 12 N/25 mm. When the pressure-sensitive adhesive strength to glass falls within the above-mentioned ranges, a sufficient pressure-sensitive adhesive strength can be exhibited to both of the polarizing plate and the supporting substrate. The pressure-sensitive adhesive strength to glass may be measured for a measurement sample obtained by forming the first pressure-sensitive adhesive layer on a PET substrate having a thickness of 50 $\mu$m.

The first pressure-sensitive adhesive layer is formed by applying a pressure-sensitive adhesive composition to any of various substrates and performing drying, radiation irradiation, or the like as required. When the first pressure-sensitive adhesive layer is formed on a release liner, the pressure-sensitive adhesive layer may be used by being transferred from the release liner onto a desired member (specifically, the supporting substrate or the polarizing plate). Alternatively, the first pressure-sensitive adhesive layer may be directly formed on the supporting substrate or the polarizing plate.

The thickness of the first pressure-sensitive adhesive layer is, for example, from 2 um to 50 $\mu$m, preferably from 5 um to 35 $\mu$m, more preferably from 10 um to 25 $\mu$m.

Any appropriate pressure-sensitive adhesive composition may be used as the pressure-sensitive adhesive composition for forming the first pressure-sensitive adhesive layer. Examples thereof include rubber-based, acrylic, silicone-based, urethane-based, vinyl alkyl ether-based, polyvinyl alcohol-based, polyvinylpyrrolidone-based, polyacrylamide-based, and cellulose-based pressure-sensitive adhesive compositions. Of those, an acrylic pressure-sensitive adhesive composition is preferably used because of being excellent in optical transparency, and also excellent in pressure-sensitive adhesive characteristics, weatherability, heat resistance, and the like.

The acrylic pressure-sensitive adhesive composition contains, as a base polymer, a partial polymerization product of monomer components containing an alkyl (meth)acrylate and/or a (meth)acrylic polymer obtained from the monomer components. Specifically, the content ratio of the (meth)acrylic polymer in the acrylic pressure-sensitive adhesive composition is preferably from 50 wt% to 100 wt%, more preferably from 60 wt% to 100 wt%, still more preferably from 70 wt% to 100 wt%, particularly preferably from 80 wt% to 100 wt%, most preferably from 90 wt% to 100 wt% in terms of solid content.

The weight-average molecular weight of the (meth) acrylic polymer is preferably from 100,000 to 3,000,000, more preferably from 150,000 to 2,000,000, still more preferably from 200,000 to 1,500,000, particularly preferably from 250,000 to 1,000,000.

Examples of the alkyl (meth)acrylate may include alkyl (meth)acrylates each having, at its ester end, a linear or branched alkyl group having 1 to 24 carbon atoms. The alkyl (meth)acrylates may be used alone or in combination thereof.

An example of the alkyl (meth)acrylate may be an alkyl (meth)acrylate having a linear or branched alkyl group having 4 to 9 carbon atoms. Such alkyl (meth)acrylate is preferred because a balance between pressure-sensitive adhesive characteristics is easily achieved. Specific examples thereof include n-butyl (meth)acrylate, s-butyl (meth)acrylate, t-butyl (meth)acrylate, isobutyl (meth)acrylate, n-pentyl (meth)acrylate, isopentyl (meth)acrylate, isohexyl (meth)acrylate, isoheptyl (meth)acrylate, 2-ethylhexyl (meth)acrylate, isooctyl (meth)acrylate, and isononyl (meth) acrylate. Those alkyl (meth) acrylates may be used alone or in combination thereof.

The usage amount of the alkyl (meth)acrylate having, at its ester end, an alkyl group having 1 to 24 carbon atoms is preferably from 40 wt% to 100 wt%, more preferably from 50 wt% to 100 wt%, still more preferably from 60 wt% to 100 wt% with respect to the total amount of monofunctional monomer components for forming the (meth)acrylic polymer.

The monomer components may contain, as a monofunctional monomer component, a copolymerizable monomer except the alkyl (meth)acrylate. The copolymerizable monomer may be used as the balance of the monomer components excluding the alkyl (meth) acrylate (for example, 20 wt% or less, or for example, 15 wt% or less with respect to the total amount of the monofunctional monomer component).

As the copolymerizable monomer and its usage amount, there may be applied a copolymerizable monomer and its usage amount described in paragraph 0029 to paragraph 0042 of Japanese Patent Application Laid-open No. 2016-157077 or a copolymerizable monomer and its usage amount described in paragraph 0022 to paragraph 0036 of Japanese Patent Application Laid-open No. 2016-190996. Examples of the copolymerizable monomer include: hydroxyl group-containing (meth)acrylates, such as hydroxyethyl (meth) acrylate, hydroxypropyl (meth)acrylate, and hydroxybutyl (meth)acrylate; carboxyl group-containing monomers, such as (meth) acrylic acid, itaconic acid, maleic acid, fumaric acid, crotonic acid, isocrotonic acid, and acid anhydrides thereof (e.g., acid anhydride group-containing monomers, such as maleic anhydride and itaconic anhydride); amide group-containing monomers, such as (meth)acrylamide, N,N-dimethyl(meth)acrylamide, N-methylol(meth)acrylamide, N-methoxymethyl(meth)acrylamide, N-butoxymethyl(meth)acrylamide, and N-hydroxyethyl (meth) acrylamide; amino group-containing monomers, such as aminoethyl (meth)acrylate, dimethylaminoethyl (meth)acrylate, and t-butylaminoethyl (meth)acrylate; epoxy group-containing monomers, such as glycidyl (meth)acrylate and methylglycidyl (meth)acrylate; cyano group-containing monomers, such as acrylonitrile and methacrylonitrile; heterocycle-containing vinyl-based monomers, such as N-vinyl-2-pyrrolidone, (meth)acryloylmorpholine, N-vinylpiperidone, N-vinylpiperazine, N-vinylpyrrole, N-vinylimidazole, vinylpyridine, vinylpyrimidine, and vinyloxazole; sulfonic acid group-containing monomers such as sodium vinylsulfonate; phosphoric acid group-containing monomers such as 2-hydroxyethylacryloyl phosphate; imide group-containing monomers, such as cyclohexylmaleimide and isopropylmaleimide; isocyanate group-containing monomers such as 2-methacryloyloxyethyl isocyanate; (meth)acrylic acid esters each having an alicyclic hydrocarbon group, such as cyclopentyl (meth)acrylate, cyclohexyl (meth)acrylate, and isobornyl (meth)acrylate; (meth)acrylic acid esters each having an aromatic hydrocarbon group, such as phenyl (meth)acrylate, phenoxyethyl (meth)acrylate, and benzyl (meth)acrylate; vinyl esters, such as vinyl acetate and vinyl propionate; aromatic vinyl compounds, such as styrene and vinyltoluene; olefins and dienes, such as ethylene, butadiene, isoprene, and isobutylene; vinyl ethers such as a vinyl alkyl ether; and vinyl chloride. The copolymerizable monomers may be used alone or in combination thereof.

The monomer components for forming the (meth)acrylic polymer may contain a polyfunctional monomer as required in addition to the monofunctional monomer in order to adjust the cohesive strength of the pressure-sensitive adhesive.

The polyfunctional monomer is a monomer having at least two polymerizable functional groups each having an unsaturated double bond, such as a (meth)acryloyl group or a vinyl group. Examples thereof include: ester compounds of polyhydric alcohols and (meth) acrylic acid, such as (poly) ethylene glycol di(meth)acrylate, (poly)propylene glycol di(meth)acrylate, neopentyl glycol di(meth)acrylate, pentaerythritol di(meth)acrylate, pentaerythritol tri(meth)acrylate, dipentaerythritol hexa(meth)acrylate, 1,2-ethylene glycol di(meth)acrylate, 1,6-hexanediol di(meth)acrylate, 1,12-dodecanediol di(meth)acrylate, trimethylolpropane tri(meth)acrylate, and tetramethylolmethane tri(meth)acrylate; and allyl (meth)acrylate, vinyl (meth)acrylate, divinylbenzene, epoxy acrylate, polyester acrylate, urethane acrylate, butyl di(meth)acrylate, and hexyl di(meth)acrylate. Of those, trimethylolpropane tri(meth)acrylate, hexanediol di(meth)acrylate, and dipentaerythritol hexa(meth)acrylate may be suitably used. The polyfunctional monomers may be used alone or in combination thereof.

The usage amount of the polyfunctional monomer varies depending on, for example, its molecular weight and number of functional groups, but the polyfunctional monomer is used at preferably 3 parts by weight or less, more preferably 2 parts by weight or less, still more preferably 1 part by weight or less with respect to 100 parts by weight in total of the monofunctional monomers. In addition, the lower limit value thereof is not particularly limited, but is preferably 0 parts by weight or more, more preferably 0.001 part by weight or more. When the usage amount of the polyfunctional monomer falls within the above-mentioned ranges, adhesive strength can be improved.

The (meth)acrylic polymer may be produced by any appropriate method. For example, radical polymerization methods, including solution polymerization, radiation polymerization such as ultraviolet (UV) polymerization, bulk polymerization, and emulsion polymerization, may each be appropriately selected. Any of various known azo-based and peroxide-based initiators may be used as a radical polymerization initiator. A reaction temperature is generally set to from about 50°C to about 80°C, and a reaction time is set to from 1 hour to 8 hours. In addition, of the above-mentioned production methods, a solution polymerization method is preferred, and ethyl acetate, toluene, or the like is generally used as a solvent for the (meth) acrylic polymer. A solution concentration is generally set to from about 20 wt% to about 80 wt%. In addition, the (meth)acrylic polymer to be obtained may be any of a random copolymer, a block copolymer, and a graft copolymer.

The pressure-sensitive adhesive composition may contain a cross-linking agent. Examples of the cross-linking agent include an isocyanate-based cross-linking agent, an epoxy-based cross-linking agent, a silicone-based cross-linking agent, an oxazoline-based cross-linking agent, an aziridine-based cross-linking agent, a silane-based cross-linking agent, an alkyl etherified melamine-based cross-linking agent, a metal chelate-based cross-linking agent, and a peroxide. The cross-linking agents may be used alone or in combination thereof. Of those, an isocyanate-based cross-linking agent is preferably used.

Examples of the isocyanate-based cross-linking agent include: aromatic isocyanates, such as tolylene diisocyanate and xylene diisocyanate; alicyclic isocyanates such as isophorone diisocyanate; and aliphatic isocyanates such as hexamethylene diisocyanate.

More specific examples thereof may include: lower aliphatic polyisocyanates, such as butylene diisocyanate and hexamethylene diisocyanate; alicyclic isocyanates, such as cyclopentylene diisocyanate, cyclohexylene diisocyanate, and isophorone diisocyanate; aromatic diisocyanates, such as 2,4-tolylene diisocyanate, 4,4'-diphenylmethane diisocyanate, xylylene diisocyanate, and polymethylene polyphenyl isocyanate; isocyanate adducts, such as a trimethylolpropane/tolylene diisocyanate trimer adduct (product name: Coronate L, manufactured by Nippon Polyurethane Industry Co., Ltd.), a trimethylolpropane/hexamethylene diisocyanate trimer adduct (product name: Coronate HL, manufactured by Nippon Polyurethane Industry Co., Ltd.), and an isocyanurate form of hexamethylene diisocyanate (product name: Coronate HX, manufactured by Nippon Polyurethane Industry Co., Ltd.), a trimethylolpropane adduct of xylylene diisocyanate (product name: D110N, manufactured by Mitsui Chemicals, Inc.), and a trimethylolpropane adduct of hexamethylene diisocyanate (product name: D160N, manufactured by Mitsui Chemicals, Inc.); and polyether polyisocyanate, polyester polyisocyanate, adducts of those compounds and various polyols, and polyisocyanates multifunctionalized by, for example, an isocyanurate bond, a biuret bond, and an allophanate bond. Of those, an aliphatic isocyanate is preferably used because its reaction rate is high.

Examples of the peroxide-based cross-linking agent include di(2-ethylhexyl) peroxydicarbonate, di(4-t-butylcyclohexyl) peroxydicarbonate, di-sec-butyl peroxydicarbonate, t-butyl peroxyneodecanoate, t-hexyl peroxypivalate, t-butyl peroxypivalate, dilauroyl peroxide, di-n-octanoylperoxide, 1,1,3,3-tetramethylbutyl peroxyisobutyrate, 1,1,3,3-tetramethylbutyl peroxy-2-ethylhexanoate, di(4-methylbenzoyl) peroxide, dibenzoyl peroxide, and t-butyl peroxyisobutyrate. Of those, di(4-t-butylcyclohexyl) peroxydicarbonate, dilauroyl peroxide, and dibenzoyl peroxide, each of which is particularly excellent in cross-linking reaction efficiency, are preferably used.

A blending ratio between the (meth)acrylic polymer and the cross-linking agent is generally preferably from about 0.001 part by weight to about 20 parts by weight, more preferably from about 0.01 part by weight to about 15 parts by weight, still more preferably from about 0.1 part by weight to about 10 parts by weight of the cross-linking agent (solid content) with respect to 100 parts by weight of the (meth)acrylic polymer (solid content).

The pressure-sensitive adhesive composition may further contain various additives, as required, for example: a UV absorber; a tackifier, such as a rosin derivative resin, a polyterpene resin, a petroleum resin, or an oil-soluble phenol resin; a plasticizer; a filler such as a hollow glass balloon; a pigment; a colorant; an antioxidant; an age resistor; and a silane coupling agent. The usage amount of the additive may be appropriately set in accordance with purposes. For example, the usage amount of the silane coupling agent is preferably 1 part by weight or less, more preferably from 0.01 part by weight to 1 part by weight, still more preferably from 0.02 part by weight to 0.6 part by weight with respect to 100 parts by weight of the monofunctional monomer components for forming the (meth)acrylic polymer.

The pressure-sensitive adhesive composition is preferably adjusted to a viscosity suited for application work. The adjustment of the viscosity may be performed by, for example, adding a thickening polymer, a polyfunctional monomer, or the like, or partially polymerizing the monomer components in the pressure-sensitive adhesive composition. The partial polymerization may be performed before the addition of a thickening polymer, a polyfunctional monomer, or the like, or may be performed after the addition. The viscosity of the pressure-sensitive adhesive composition may change depending on, for example, the composition of the monomer components, and the kind and blending amount of the additive, and hence it is difficult to unambiguously determine a preferred polymerization ratio of the partial polymerization, but the polymerization ratio may be, for example, about 20% or less, preferably from 3% to 20%, more preferably from about 5% to about 15%. When the polymerization ratio in the partial polymerization is more than 20%, the viscosity becomes so high as to make the application to the substrate difficult.

A-5. Second Pressure-sensitive Adhesive Layer

The second pressure-sensitive adhesive layer 40 typically has a pressure-sensitive adhesive strength to glass of 1.0 N/25 mm or more, preferably 2.0 N/25 mm or more, more preferably 2.5 N/25 mm or more. The pressure-sensitive adhesive strength to glass of the second pressure-sensitive adhesive layer **40** may be, for example, 10 N/25 mm or less, 9.0 N/25 mm or less, or 6.0 N/25 mm or less. When the pressure-sensitive adhesive strength to glass falls within the above-mentioned ranges, workability at the time of reworking or at the time of peeling and removal can be improved, and besides, under a state in which the polarizing film laminate is bonded to an adherend, its floating and peeling can be suppressed to maintain a satisfactory bonding state. In addition, the absolute value of a difference between the pressure-sensitive adhesive strength to glass of the first pressure-sensitive adhesive layer and the pressure-sensitive adhesive strength to glass of the second pressure-sensitive adhesive layer may be, for example, from 0 N/25 mm to 4.5 N/25 mm. The pressure-sensitive adhesive strength to glass may be measured for a measurement sample obtained by forming the second pressure-sensitive adhesive layer on a PET substrate having a thickness of 50 μm.

The pressure-sensitive adhesive strength to glass of the second pressure-sensitive adhesive layer is preferably equal to or less than the pressure-sensitive adhesive strength of the first pressure-sensitive adhesive layer with respect to the supporting substrate, more preferably less than the pressure-sensitive adhesive strength of the first pressure-sensitive adhesive layer with respect to the supporting substrate. Similarly, the pressure-sensitive adhesive strength to glass of the second pressure-sensitive adhesive layer is preferably equal to or less than each of the pressure-sensitive adhesive strength of the first pressure-sensitive adhesive layer with respect to the polarizing plate and the pressure-sensitive adhesive strength of the second pressure-sensitive adhesive layer with respect to the supporting substrate, more preferably less than these pressure-sensitive adhesive strengths. When the pressure-sensitive adhesive strength of the first pressure-sensitive adhesive layer and the pressure-sensitive adhesive strength of the second pressure-sensitive adhesive layer satisfy the above-mentioned relationships, the effects of the present invention can be more suitably obtained. The above-mentioned pressure-sensitive adhesive strengths may be adjusted to desired values by, for example: appropriately selecting the pressure-sensitive adhesive composition(s) for forming the first pressure-sensitive adhesive layer and/or the second pressure-sensitive adhesive layer; adjusting the thickness(es) of the pressure-sensitive adhesive layer(s); or subjecting the supporting substrate or the polarizing plate to easy-adhesion treatment (e.g., surface treatment such as corona treatment, or the formation of an easy-adhesion layer).

In at least one embodiment of the present invention, when the second pressure-sensitive adhesive layer is bonded to a glass plate by wet application attachment, the pressure-sensitive adhesive strength (peel angle: 90°, peel rate: 300 mm/min, 23°C) of the second pressure-sensitive adhesive layer with respect to the glass plate after 4 days from the bonding is, for example, 0.2 N/25 mm or more, preferably 0.3 N/25 mm or more, more preferably 0.5 N/25 mm or more, still more preferably 0.8 N/25 mm or more, and is, for example, 5.0 N/25 mm or less, preferably 4.5 N/25 mm or less. The pressure-sensitive adhesive strength to glass may be measured for a measurement sample obtained by forming the second pressure-sensitive adhesive layer on a PET substrate having a thickness of 50 um. The wet application attachment is described in detail in the section C.

The second pressure-sensitive adhesive layer is formed by applying a pressure-sensitive adhesive composition to any of various substrates and performing drying, radiation irradiation, and the like as required. For example, the second pressure-sensitive adhesive layer may be formed on a release liner and bonded to the supporting substrate together with the release liner. Alternatively, the second pressure-sensitive adhesive layer may be formed on a release liner, be transferred from the release liner to the supporting substrate, and have another release liner temporarily bonded thereonto. The second pressure-sensitive adhesive layer may be directly formed on the supporting substrate.

The thickness of the second pressure-sensitive adhesive layer is, for example, from 5 um to 100 $\mu$m, preferably from 7 um to 60 $\mu$m, more preferably from 10 um to 40 $\mu$m.

Any appropriate pressure-sensitive adhesive composition may be used as the pressure-sensitive adhesive composition for forming the second pressure-sensitive adhesive layer as long as the above-mentioned pressure-sensitive adhesive strength to glass is achieved. Examples thereof include rubber-based, acrylic, silicone-based, urethane-based, vinyl alkyl ether-based, polyvinyl alcohol-based, polyvinylpyrrolidone-based, polyacrylamide-based, and cellulose-based pressure-sensitive adhesive compositions. Of those, an acrylic pressure-sensitive adhesive composition is preferably used because of being excellent in optical transparency, also excellent in pressure-sensitive adhesive characteristics, weatherability, heat resistance, and the like, and also excellent in moisture barrier property. The same description as that of the pressure-sensitive adhesive composition that may form the first pressure-sensitive adhesive layer described in the section A-4 may be applied to the acrylic pressure-sensitive adhesive composition that may form the second pressure-sensitive adhesive layer. In addition, through, for example, use of a (meth)acrylic polymer in which the usage amount of a carboxyl group-containing monomer is small (e.g., a (meth)acrylic polymer in which the usage amount of the carboxyl group-containing monomer in 100 parts by weight of the monofunctional monomer components for forming the (meth)acrylic polymer is 10 parts by weight or less, preferably 5 parts by weight or less, more preferably 1 part by weight or less, still more preferably 0.5 part by weight or less (e.g., 0 parts by weight)), or use of a pressure-sensitive adhesive composition in which the usage amount of a silane coupling agent is small (e.g., a pressure-sensitive adhesive composition in which the usage amount of the silane coupling agent is 1 part by weight or less, preferably from 0 parts by weight to 0.5 part by weight, more preferably from 0 parts by weight to 0.3 part by weight with respect to 100 parts by weight of the monofunctional monomer components for forming the (meth)acrylic polymer), the pressure-sensitive adhesive strength to glass can be prevented from excessively increasing over time, and as a result, there can be obtained a polarizing film laminate excellent in reworkability and workability of peeling and removal while being suppressed from floating and peeling.

In at least one embodiment of the present invention, the water absorption ratio of the second pressure-sensitive adhesive layer is preferably 2% or more, and is, for example, 3% or more, or for example, 5% or more. The water absorption ratio of the second pressure-sensitive adhesive layer is preferably 15% or less, and is, for example, 12% or less, or for example, 10% or less. When the water absorption ratio is excessively low, high pressure-sensitive adhesive strength is expressed from immediately after wet application attachment to make reworking difficult in some cases. When the water absorption ratio is excessively high, an adhesive residue is liable to occur at the time of reworking or peeling and removal. The pressure-sensitive adhesive layer having the above-mentioned water absorption ratio may be obtained by, for example, introducing a hydroxy group into a base polymer (preferably a (meth) acrylic polymer), or reducing a gel fraction.

The water absorption ratio may be measured by, for example, the following method. In this case, measurement may be performed for a plurality of samples (e.g., N≥3), and their average value may be adopted as the water absorption ratio.

<Water Absorption Ratio>

A product obtained by cutting a pressure-sensitive adhesive layer (thickness: 20 um) produced on a substrate to a size of 25 mm×100 mm together with the substrate, and bonding the substrate surface of the resultant to an aluminum plate (2 mmt) via a double-sided pressure-sensitive adhesive tape is used as an evaluation sample. In addition, a product obtained by bonding only the substrate (PET film having a thickness of 50 $\mu$m) to the aluminum plate via the double-sided pressure-sensitive adhesive tape is used as a blank sample. The evaluation sample and the blank sample are immersed in water for attachment (e.g., water or a water-diluted liquid (about 0.5 wt%) of a concentrate for film attachment (product name: "FILM-ON")) at room temperature (about 23°C), and taken out after 96 hours. The water absorption ratio may be calculated by the following equation from the weight changes of the evaluation sample and the blank sample through the immersion.

Water absorption ratio (wt%)=[(increase in weight of evaluation sample through immersion-increase in weight of blank sample through immersion)/weight of evaluation sample before immersion)]×100

A-6. Release Liner

Examples of the release liner **50** include paper, a plastic film, a polytetrafluoroethylene (PTFE) film, and a resin film having a surface subjected to silicone treatment or fluorinated silicone treatment.

A-7. Protective Substrate

Any appropriate substrate capable of protecting the exposed surface of the polarizing film laminate may be used as the protective substrate **60** in accordance with purposes. Specific examples thereof include resin substrates, such as a polyvinyl chloride film and a (meth)acrylic resin film such as PMMA, or the like.

The thickness of the protective substrate may be, for example, from 0.1 um to 2 mm, preferably from 0.1 um to 1.5 mm.

B. Barrier

According to at least one embodiment of the present invention, there is provided a transparent barrier configured to divide a space having placed therein an image display apparatus configured to emit linearly polarized light from a display screen, the barrier having bonded thereto the polarizing film laminate described in the foregoing section A via the second pressure-sensitive adhesive layer so that the absorption axis of the polarizer is substantially parallel to the vibration direction of the linearly polarized light to be emitted by the image display apparatus.

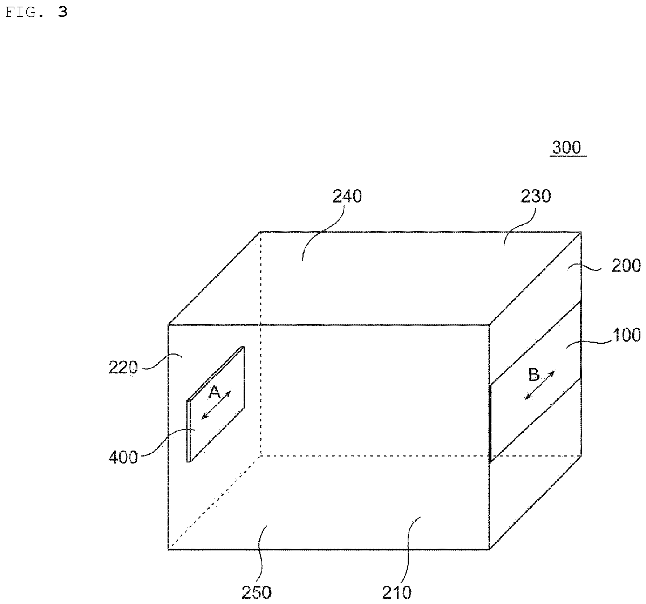

FIG. **3** is a schematic view for illustrating an example of a barrier having applied thereto the polarizing film laminate described in the section A. A space (room) **300** is divided by a pair of walls **200** and **220** opposed to each other, another pair of walls **210** and **230** opposed to each other in a direction intersecting the walls **200** and **220,** a ceiling **240,** and a floor **250,** and has placed therein an image display apparatus **400**. The wall **200** is a whole-surface window with its whole surface being formed of a transparent member (e.g., having a total light transmittance of 70% or more), and has a polarizing film laminate **100** bonded thereto so as to cover a part thereof corresponding to the image display apparatus **400** when an observer observes the inside of the space **300** from the outside of the wall **200**. In addition, in this case, the polarizing film laminate **100** is arranged so that the vibration direction of linearly polarized light to be emitted by the image display apparatus **400** (direction indicated by the arrow A) and the absorption axis direction of the polarizer in the polarizing film laminate **100** (direction indicated by the arrow B) are substantially parallel to each other, and specifically, have an angle of 0°±10°, preferably an angle of 0°±5°, more preferably an angle of 0°±3°.

According to such configuration as described above, the linearly polarized light emitted by the image display apparatus **400** is absorbed by the polarizing film laminate **100,** and hence the content displayed by the image display apparatus **400** can be prevented from being observed from the outside of the wall **200.**

Part of the wall **200** may be a transparent barrier (window) unlike the illustrated example. In addition, the transparent barrier to which the polarizing film laminate is bonded is not limited to a window (including a whole-surface window), and may be, for example, a door or a partition. The polarizing film laminate may be bonded to the whole surface of the transparent barrier, or may be bonded to part thereof (only a required portion).

C. Bonding Method for Polarizing Film Laminate

The polarizing film laminate described in the section A is bonded to an adherend by bringing its second pressure-sensitive adhesive layer surface into close contact with the adherend. In at least one embodiment of the present invention, the bonding of the polarizing film laminate described in the section A to an adherend may be performed by applying water to the second pressure-sensitive adhesive layer surface of the polarizing film laminate and/or the surface of the adherend, and pressure-bonding the polarizing film laminate to the adherend while pushing the water interposed between the second pressure-sensitive adhesive layer and the adherend out of an interface therebetween (herein, the pressure-bonding involving causing water to be present between the second pressure-sensitive adhesive layer of the polarizing film laminate and the adherend, and pushing out the water is sometimes referred to as "wet application attachment").

Immediately after the wet application attachment, a state in which a small amount of water remains between the second pressure-sensitive adhesive layer and the adherend is achieved, and hence the pressure-sensitive adhesive strength of the polarizing film laminate with respect to the adherend is at such a level as to allow reworking. The water is dried and removed over time to increase the pressure-sensitive adhesive strength, with the result that floating and peeling can be suitably suppressed thereafter. In the wet application attachment, the water and air bubbles remaining at the interface can be satisfactorily pushed out by pressing a tool such as a squeegee against the back surface side of the polarizing film laminate in a stroking manner. In addition, the water to be interposed between the polarizing film laminate and the adherend is preferably purified water, such as pure water or ion-exchanged water, and may contain an additive such as a surfactant as long as the effects of the present invention are obtained. The surfactant is used for increasing slidability in the presence of water at the interface between the polarizing film laminate and the adherend (e.g., a glass plate) to facilitate the adjustment of their positions, and hence the pressure-sensitive adhesive strength of the polarizing film laminate with respect to the adherend is not significantly affected by the presence or presence of the additive. The amount of the water to be applied is not particularly limited, and may be, for example, from about 0.5 mL/100 cm$^2$ to about 1.0 mL/100 cm$^2$.

The pressure-sensitive adhesive strength (peel angle: 90°, peel rate: 300 mm/min, 23°C) of the polarizing film laminate with respect to the adherend after a lapse of 3 days from its bonding thereto may be preferably from 1.0 N/25 mm to 6.0 N/25 mm, more preferably from 2.5 N/25 mm to 4.5 N/25 mm.

In at least one embodiment of the present invention, the pressure-sensitive adhesive strength (peel angle: 90°, peel rate: 300 mm/min, 23°C) of the polarizing film laminate with respect to a glass plate after 4 days from its bonding to the glass plate by the wet application attachment is, for example, 0.2 N/25 mm or more, preferably 0.3 N/25 mm or more, more preferably 0.5 N/25 mm or more, still more preferably 0.8 N/25 mm or more, and is, for example, 5.0 N/25 mm or less, preferably 4.5 N/25 mm or less. When the pressure-sensitive adhesive strength of the polarizing film laminate with respect to the glass plate after 4 days from the attachment falls within the above-mentioned ranges, the polarizing film laminate can be peeled off with relative ease at least for about one week from the attachment, thereby being able to exhibit excellent reworkability.

In at least one embodiment of the present invention, the pressure-sensitive adhesive strength (peel angle: 90°, peel rate: 300 mm/min, 23°C) of the polarizing film laminate with respect to a glass plate after 30 minutes from its bonding to the glass plate by the wet application attachment is, for example, 0.01 N/25 mm or more, preferably 0.02 N/25 mm or more, and is, for example, 2 N/25 mm or less, preferably 1 N/25 mm or less.

Examples

The present invention is specifically described below by way of Examples, but the present invention is not limited to these Examples. In addition, "part (s)" and "%" in Examples are by weight unless otherwise specified.

(1) Thickness

Measurement was performed by using a digital gauge (manufactured by Ozaki MFG. Co., Ltd., product name: "PEACOCK").

(2) Pressure-sensitive Adhesive Strength to Glass

A pressure-sensitive adhesive strength to glass was measured for N=3 by using a pressure-sensitive adhesion/coating peeling analyzer (manufactured by Kyowa Interface Science Co., Ltd., product name: "VPA-H200") in conformity with JIS Z0237 under the following conditions, and their average value was determined.

Adherend: manufactured by Matsunami Glass Ind., Ltd., MICRO SLIDE GLASS S200423, ground edges, t1.3 (size: 65 mm×165 mm, thickness: 1.2 mm to 1.5 mm)

Test piece: polarizing film laminate obtained in each of Examples or Comparative Examples cut into a size of 25 mm×150 mm

Bonding method (dry method): The pressure-sensitive adhesive layer surface of the polarizing film laminate was bonded to the adherend without water interposed therebetween, followed by 1 pass back and forth with a 2 kg roller thereon.

Bonding method (wet application method): A liquid for film attachment (aqueous solution (about 0.5 wt% solution) obtained by diluting a concentrate for film attachment (product name: "FILM-ON") with water about 200-fold) was sprayed onto the surfaces of the adherend and the pressure-sensitive adhesive layer of the polarizing film laminate, the pressure-sensitive adhesive layer surface of the polarizing film laminate was bonded to the adherend, and a squeegee was pressed against the polarizing film laminate in such a manner as to stroke its back surface, to thereby push air and the liquid for attachment out of the interface therebetween. Thus, the polarizing film laminate was bonded to the adherend.

Measurement: 30 minutes or 4 days (96 hours) of standing still after bonding before measurement (bonding, standing, and measurement were performed under conditions of 23°C and 50RH%)

Peel angle: 90°

Peel rate: 300 mm/min

(3) Single Layer Transmittance and Polarization Degree of Polarizer

A single layer transmittance Ts, a parallel transmittance Tp, and a cross transmittance Tc measured for a polarizing plate using a UV-Vis/NIR spectrophotometer (V-7100 manufactured by JASCO Corporation) were adopted as the Ts, Tp, and Tc of its polarizer, respectively. The Ts, the Tp, and the Tc are Y values measured with the two-degree field of view (C light source) of JIS Z8701 and subjected to visibility correction. A polarization degree was determined from the resultant Tp and Tc through use of the following equation.

$$\text{Polarization degree } (\%) = \{(Tp - Tc)/(Tp + Tc)\}^{1/2} \times 100$$

[Production Example 1: Preparation of Acrylic Pressure-sensitive Adhesive Layer A]

(Preparation of Acrylic Polymer Solution)

A monomer mixture containing 81.8 parts of butyl acrylate, 16 parts of phenoxyethyl acrylate, 1.5 parts of N-vinyl-2-pyrrolidone, 0.3 part of acrylic acid, and 0.4 part of 4-hydroxybutyl acrylate was loaded into a four-necked flask with a stirring blade, a temperature gauge, a nitrogen gas-introducing tube, and a condenser. Further, with respect to 100 parts of the monomer mixture (solid content), 0.1 part of 2,2'-azobisisobutyronitrile was loaded as a polymerization initiator together with 100 parts of ethyl acetate. While the mixture was gently stirred, a nitrogen gas was introduced to perform nitrogen purging. After that, while the liquid temperature in the flask was kept around 55°C, a polymerization reaction was performed for 8 hours to prepare a solution of an acrylic polymer A having a weight-average molecular weight (Mw) of 1,570,000 in which Mw/Mn=3.3.

(Preparation of Acrylic Pressure-sensitive Adhesive Composition)

With respect to 100 parts of the solid content of the solution of the acrylic polymer A, 0.1 part of an isocyanate cross-linking agent (TAKENATE D160N manufactured by Mitsui Chemicals, Inc., trimethylolpropane-hexamethylene diisocyanate), 0.3 part of a peroxide-based cross-linking agent (benzoyl peroxide (product name: NYPER BMT, manufactured by Nippon Oil & Fats Co., Ltd.)), and 0.2 part of a silane coupling agent (product name: KBM403, manufactured by Shin-Etsu Chemical Co., Ltd.) were blended to prepare an acrylic pressure-sensitive adhesive composition A.

The acrylic pressure-sensitive adhesive composition A obtained in the foregoing was applied to one surface of a polyethylene terephthalate film treated with a silicone-based releasing agent (release liner: manufactured by Mitsubishi Polyester Film Corporation, MRF38) so that a pressure-sensitive adhesive layer after drying had a thickness of 15 um, and the applied composition was dried at 155°C for 1 minute to form an acrylic pressure-sensitive adhesive layer A on the surface of the release liner.

[Production Example 2: Preparation of Acrylic Pressure-sensitive Adhesive Layer B]

(Preparation of Acrylic Polymer Solution)

A monomer mixture containing 94.9 parts by weight of butyl acrylate, 5 parts by weight of acrylic acid, and 0.1 part by weight of 2-hydroxyethyl acrylate was loaded into a four-necked flask with a stirring blade, a temperature gauge, a nitrogen gas-introducing tube, and a condenser. With respect to 100 parts by weight of the solid content of the monomer mixture, 0.1 part by weight of 2,2'-azobisisobutyronitrile was added as a polymerization initiator together with ethyl acetate. While the resulting mixture was gently stirred, a nitrogen gas was introduced to perform nitrogen purging. Then, while the liquid temperature in the flask was kept around 55°C, a polymerization reaction was performed for 7 hours. Ethyl acetate was added to the resultant reaction liquid to adjust the concentration of a polymer component to 30 wt% to prepare a solution of an acrylic polymer B having a weight-average molecular weight of 2,000,000.

(Preparation of Acrylic Pressure-sensitive Adhesive Composition)

0.6 Part by weight of an isocyanate-based cross-linking agent (product name: CORONATE L, trimethylolpropane-tolylene diisocyanate, manufactured by Nippon Polyurethane Industry Co., Ltd.), 0.2 part by weight of a peroxide-based cross-linking agent (benzoyl peroxide (product name: NYPER BMT, manufactured by Nippon Oil & Fats Co., Ltd.)), and 0.2 part by weight of a silane coupling agent (product name: KBM403, manufactured by Shin-Etsu Chemical Co., Ltd.) were mixed with respect to 100 parts by weight of the polymer component of the solution of the acrylic polymer B to prepare an acrylic pressure-sensitive adhesive composition B.
The acrylic pressure-sensitive adhesive composition B obtained in the foregoing was uniformly applied with a fountain coater to the surface of a release liner (polyethylene terephthalate film treated with a silicone-based releasing agent). After that, the resultant was dried in an air-circulating thermostatic oven at 155°C for 70 seconds to form a pressure-sensitive adhesive layer B having a thickness of 20 um on the surface of the release liner.

[Production Example 3: Preparation of Acrylic Pressure-sensitive Adhesive Layer C]

(Preparation of Acrylic Polymer Solution)

A reaction vessel with a condenser, a nitrogen-introducing tube, a temperature gauge, and a stirring device was loaded with 99 parts of butyl acrylate, 1.0 part of 4-hydroxybutyl acrylate, and 0.3 part of 2,2'-azobisisobutyronitrile together with ethyl acetate. The contents were subjected to a reaction at 60°C for 4 hours under a stream of nitrogen gas, and then ethyl acetate was added to the reaction liquid to provide a solution (solid content concentration: 30%) containing an acrylic polymer having a weight-average molecular weight of 1,650,000. 0.3 Part of benzoyl peroxide (manufactured by Nippon Oil & Fats Co., Ltd. : NYPER BMT), 0.1 part of trimethylolpropane xylene diisocyanate (manufactured by Mitsui Takeda Chemicals Inc.: TAKENATE D110N), and 0.2 part of an acetoacetyl group-containing silane coupling agent (manufactured by Soken Chemical & Engineering Co., Ltd.: A-100) were blended per 100 parts of the solid content of the acrylic polymer solution to prepare an acrylic pressure-sensitive adhesive composition C.
The acrylic pressure-sensitive adhesive composition C obtained in the foregoing was uniformly applied with a fountain coater to the surface of a release liner (polyethylene terephthalate film treated with a silicone-based releasing agent). After that, the resultant was dried in an air-circulating thermostatic oven at 155°C for 70 seconds to form a pressure-sensitive adhesive layer C having a thickness of 20 um on the surface of the release liner.

[Example 1]

(Production of Polarizing Plate)

An amorphous isophthalic acid-copolymerized polyethylene terephthalate film having an elongate shape and having a Tg of about 75°C (thickness: 100 um) was used as a thermoplastic resin substrate, and one surface of the resin substrate was subjected to corona treatment.
13 Parts by weight of potassium iodide was added to 100 parts by weight of a PVA-based resin obtained by mixing polyvinyl alcohol (polymerization degree: 4,200, saponification degree: 99.2 mol%) and acetoacetyl-modified PVA (manufactured by The Nippon Synthetic Chemical Industry Co., Ltd., product name: "GOHSEFIMER") at 9:1, and the resultant was dissolved in water to prepare an aqueous solution of PVA (application liquid).
The aqueous solution of PVA was applied to the corona-treated surface of the resin substrate and dried at 60°C to form a PVA-based resin layer having a thickness of 13 $\mu$m, to thereby produce a laminate.
The resultant laminate was uniaxially stretched in its longitudinal direction (lengthwise direction) at 2.4 times in an oven at 130°C (in-air auxiliary stretching treatment).

Then, the laminate was immersed in an insolubilizing bath having a liquid temperature of 40°C (aqueous solution of boric acid obtained by blending 100 parts by weight of water with 4 parts by weight of boric acid) for 30 seconds (insolubilizing treatment).

Then, the laminate was immersed in a dyeing bath having a liquid temperature of 30°C (aqueous solution of iodine obtained by blending 100 parts by weight of water with iodine and potassium iodide at a weight ratio of 1:7) for 60 seconds while a concentration was adjusted so that the single layer transmittance (Ts) of a polarizer to be finally obtained took a desired value (dyeing treatment).

Then, the laminate was immersed in a cross-linking bath having a liquid temperature of 40°C (aqueous solution of boric acid obtained by blending 100 parts by weight of water with 3 parts by weight of potassium iodide and with 5 parts by weight of boric acid) for 30 seconds (cross-linking treatment).

After that, the laminate was uniaxially stretched in its longitudinal direction (lengthwise direction) between rolls having different peripheral speeds so as to achieve a total stretching ratio of 5.5 times while being immersed in an aqueous solution of boric acid having a liquid temperature of 70°C (boric acid concentration: 4 wt%, potassium iodide concentration: 5 wt%) (underwater stretching treatment).

After that, the laminate was immersed in a washing bath having a liquid temperature of 20°C (aqueous solution obtained by blending 100 parts by weight of water with 4 parts by weight of potassium iodide) (washing treatment).

After that, the laminate was brought into contact with a heated roll made of SUS kept at a surface temperature of about 75°C while being dried in an oven kept at about 90°C (drying shrinkage treatment) .

Thus, a polarizer having a thickness of about 5 um was formed on the resin substrate to provide a laminate having the configuration "resin substrate/polarizer".

A triacetylcellulose (TAC) film with a hard coat layer (hard coat layer thickness: 3 um, TAC thickness: 25 $\mu$m) was bonded as a protective layer to a surface of the polarizer obtained in the foregoing (surface thereof on the opposite side to the resin substrate) via a UV-curable adhesive. Then, the resin substrate was peeled off to provide a polarizing plate having the configuration "[polarizer/TAC protective layer]". The resultant polarizer had a single layer transmittance of 43% and a polarization degree of 99.9%.

(Production of Polarizing Film Laminate)

The pressure-sensitive adhesive layer A was transferred from the release liner to the polarizer-side surface of the polarizing plate obtained in the foregoing. To the pressure-sensitive adhesive layer surface of the resultant polarizing plate with a pressure-sensitive adhesive layer, a supporting substrate (PET film having a thickness of 50 $\mu$m: manufactured by Toray Industries, Inc., product name: "Lumirror S10", water absorption ratio<1%) was bonded. Then, the pressure-sensitive adhesive layer C was transferred to the supporting substrate surface. Thus, a polarizing film laminate having the configuration "[TAC protective layer/polarizer/pressure-sensitive adhesive layer A/PET supporting substrate/pressure-sensitive adhesive layer C]" was obtained.

[Example 2]

The pressure-sensitive adhesive layer A was transferred from the release liner to the polarizer-side surface of a polarizing plate obtained in the same manner as in Example 1. To the pressure-sensitive adhesive layer surface of the resultant polarizing plate with a pressure-sensitive adhesive layer, a PET-based resin film with an acrylic pressure-sensitive adhesive layer (manufactured by Lintec Corporation, product name: "1501E", total thickness: 70 um (including a PET thickness of 50 um)) was bonded so that the resin film faced the pressure-sensitive adhesive layer A. Thus, a polarizing film laminate having the configuration "[TAC protective layer/polarizer/pressure-sensitive adhesive layer A/PET-based resin film/acrylic pressure-sensitive adhesive layer]" was obtained.

[Example 3]

A polarizing film laminate having the configuration "[TAC protective layer/polarizer/pressure-sensitive adhesive layer A/PET supporting substrate/pressure-sensitive adhesive layer A]" was obtained in the same manner as in Example 1 except that the pressure-sensitive adhesive layer A was used in place of the pressure-sensitive adhesive layer C.

[Example 4]

The pressure-sensitive adhesive layer A was transferred from the release liner to the polarizer-side surface of a polarizing plate obtained in the same manner as in Example 1. To the pressure-sensitive adhesive layer surface of the resultant polarizing plate with a pressure-sensitive adhesive layer, a polyethylene-based film with an acrylic pressure-sensitive adhesive layer (manufactured by Nitto Denko Corporation, product name: "E-MASK R300", total thickness: 70 μm) was bonded so that the polyethylene-based film faced the pressure-sensitive adhesive layer A. Thus, a polarizing film laminate having the configuration "[TAC protective layer/polarizer/pressure-sensitive adhesive layer A/polyethylene-based film/acrylic pressure-sensitive adhesive layer]" was obtained.

[Example 5]

The pressure-sensitive adhesive layer A was transferred from the release liner to the polarizer-side surface of a polarizing plate obtained in the same manner as in Example 1. To the pressure-sensitive adhesive layer surface of the resultant polarizing plate with a pressure-sensitive adhesive layer, a PET-based resin film with an acrylic pressure-sensitive adhesive layer (manufactured by Nitoms, Inc., product name: "M6330", total thickness: 75 pm (including a PET thickness of 50 μm)) was bonded so that the resin film faced the pressure-sensitive adhesive layer A. Thus, a polarizing film laminate having the configuration "[TAC protective layer/polarizer/pressure-sensitive adhesive layer A/PET-based resin film/acrylic pressure-sensitive adhesive layer]" was obtained.

[Example 6]

The pressure-sensitive adhesive layer A was transferred from the release liner to the polarizer-side surface of a polarizing plate obtained in the same manner as in Example 1. To the pressure-sensitive adhesive layer surface of the resultant polarizing plate with a pressure-sensitive adhesive layer, a PET-based resin film with an acrylic pressure-sensitive adhesive layer (manufactured by Riken Technos Corporation, product name: "SS50TO", total thickness: 75 um (including a PET thickness of 50 μm)) was bonded so that the resin film faced the pressure-sensitive adhesive layer A. Thus, a polarizing film laminate having the configuration "[TAG protective layer/polarizer/pressure-sensitive adhesive layer A/PET-based resin film/acrylic pressure-sensitive adhesive layer]" was obtained.

[Comparative Example 1]

The pressure-sensitive adhesive layer A was transferred from the release liner to the polarizer-side surface of a polarizing plate obtained in the same manner as in Example 1. To the pressure-sensitive adhesive layer surface of the resultant polarizing plate with a pressure-sensitive adhesive layer, a PET film with an acrylic pressure-sensitive adhesive layer (manufactured by 3M, product name: "SH2CLAR", pressure-sensitive adhesive layer thickness: 26 μm, PET film thickness: 50 μm) was bonded so that the PET film faced the pressure-sensitive adhesive layer A. Thus, a polarizing film laminate having the configuration "[TAC protective layer/polarizer/pressure-sensitive adhesive layer A/PET supporting substrate/acrylic pressure-sensitive adhesive layer]" was obtained.

[Comparative Example 2]

A polarizing film laminate having the configuration "[TAC protective layer/polarizer/pressure-sensitive adhesive layer A/PET supporting substrate/pressure-sensitive adhesive layer B]" was obtained in the same manner as in Example 1 except that the pressure-sensitive adhesive layer B was used in place of the pressure-sensitive adhesive layer C.

[Comparative Example 3]

The pressure-sensitive adhesive layer A was transferred from the release liner to the polarizer-side surface of a polarizing plate obtained in the same manner as in Example 1. To the pressure-sensitive adhesive layer surface of the resultant polarizing plate with a pressure-sensitive adhesive layer, a PET film with a pressure-sensitive adhesive layer containing an olefin-based elastomer (manufactured by Panac Co., Ltd., product name: "Gelpolyclear 50UV-IJII", pressure-sensitive adhesive layer thickness: 35 um, PET film thickness: 50 μm) was bonded so that the PET film faced the pressure-sensitive adhesive layer A. Thus, a polarizing film laminate having the configuration "[TAC protective layer/polarizer/pressure-sensitive adhesive layer A/PET film/olefin-based elastomer pressure-sensitive adhesive layer] " was obtained.

<<Peelability Evaluation>>

The polarizing film laminates (1,000 mm×500 mm) obtained in Examples 1 to 6 and Comparative Examples 1 to 3 were each bonded to a glass partition via the pressure-sensitive adhesive layer arranged on the surface on the opposite side to the protective layer. The bonding was performed by wet application attachment.

Specifically, a liquid for film attachment (aqueous solution (about 0.5 wt% solution) obtained by diluting a concentrate for film attachment (product name: "FILM-ON") with water 200-fold) was sprayed onto the surfaces of the glass partition and the pressure-sensitive adhesive layer of the polarizing film laminate, the pressure-sensitive adhesive layer surface of the polarizing film laminate was bonded to a predetermined position on the glass partition in a state of being wet with the liquid for attachment, and their positions were adjusted while the polarizing film laminate was slid. Then, a squeegee was brought into contact with the back surface (protective layer-side surface) of the polarizing film laminate and slid along the back surface of the polarizing film laminate to press the polarizing film laminate against the glass partition, thereby pushing air and the liquid for attachment out of the interface therebetween. Thus, the polarizing film laminate was bonded to the glass partition.

After 2 hours and after 1 month from the operation of pushing out air and water (liquid for attachment) (water removal),peelability at a time when an end portion of the polarizing film laminate was rolled up with fingers in order to peel the polarizing film laminate from the glass partition was evaluated on the basis of the following criteria. The results of the evaluation after 2 hours and after 1 month are shown in Table 1 as attachability (initial reworkability) and peelability over time, respectively.

∘: The polarizing film laminate can be easily peeled off.
Δ: The polarizing film laminate is difficult to peel off because its peeling is heavy.
✕: The polarizing film laminate cannot be peeled off.

<<Floating and Peeling Evaluation>>

A4 size and 500 mm✕1,000 mm size samples were prepared for each of the polarizing film laminates obtained in Examples 1 to 6 and Comparative Examples 1 to 3. Each sample was bonded to a glass partition by wet application attachment in the same manner as in the peelability evaluation. After the A4 size samples (N=3) had been placed under an environment at 60°C and 90%RH for 500 hours, or after the 500 mm✕1,000 mm size samples had been bonded to glass partitions in a meeting room (about 30 surfaces in total, N=3 or 4 for each sample) and installed there for 6 months, the bonding state was checked and evaluated on the basis of the following criteria. In addition, 846 mm✕846 mm size samples (N=3) were prepared for the polarizing film laminates except that of Example 4, and were each bonded to an 850 mm✕850 mm size glass partition by wet application attachment in the same manner as described above. Then, after a lapse of 150 hours (1 week) under an environment at 60°C and 90%RH, the bonding state was checked and evaluated on the basis of the following criteria. The results are shown in Table 1.

∘: Floating and peeling did not occur in any of the samples.
Δ: Floating and peeling occurred in some of the samples.
✕: Floating and peeling occurred in all of the samples.

Table 1

| | Dry attachment pressure-sensitive adhesive strength to glass [N/25 mm] | | Wet application attachment pressure-sensitive adhesive strength to glass [N/25 mm] | | Attachability (initial reworkability) | Peelability over time | Floating and peeling |
|---|---|---|---|---|---|---|---|
| | 30 min | 4 d | 30 min | 4 d | | | |
| Comparative Example 2 | 6.22 | 6.88 | 1.47 | 5.46 | Δ | ✕ | ○ |
| Comparative Example 1 | 8.35 | 10.83 | 0.04 | 5.23 | Δ | ✕ | ○ |
| Example 6 | 8.21 | 10.50 | 0.09 | 4.54 | ○ | ○ | ○ |
| Example 2 | 5.56 | 10.05 | 0.04 | 3.98 | ○ | ○ | ○ |
| Example 5 | 8.63 | 8.53 | 0.03 | 2.51 | ○ | ○ | ○ |
| Example 3 | 4.25 | 5.10 | 0.27 | 1.68 | ○ | ○ | ○ |
| Example 1 | 3.24 | 4.15 | 0.02 | 1.16 | ○ | ○ | ○ |
| Example 4 | 1.05 | 1.15 | 0.02 | 0.25 | ○ | ○ | Δ |

(continued)

| | Dry attachment pressure-sensitive adhesive strength to glass [N/25 mm] | | Wet application attachment pressure-sensitive adhesive strength to glass [N/25 mm] | | Attachability (initial reworkability) | Peelability over time | Floating and peeling |
|---|---|---|---|---|---|---|---|
| | 30 min | 4 d | 30 min | 4 d | | | |
| Comparative Example 3 | 0.11 | 0.11 | 0.02 | 0.05 | ○ | ○ | × |

[Example 7]

A polarizing film laminate having the configuration " [TAC protective layer/polarizer/pressure-sensitive adhesive layer A/acrylic supporting substrate/pressure-sensitive adhesive layer C]" was obtained in the same manner as in Example 1 except that an acrylic resin film (thickness: 40 um: manufactured by Toyo Kohan Co., Ltd., product name: "HX40UC") was used as the supporting substrate.

[Example 8]

A polarizing film laminate having the configuration "[TAC protective layer/polarizer/pressure-sensitive adhesive layer A/TAC supporting substrate/pressure-sensitive adhesive layer C]" was obtained in the same manner as in Example 1 except that a TAG film (thickness: 40 um: manufactured by Konica Minolta, Inc., product name: "KC4UY") was used as the supporting substrate.

<<Curl Evaluation>>

A polarizing plate 1 with a pressure-sensitive adhesive layer having the configuration "[TAC protective layer/polarizer/pressure-sensitive adhesive layer A]", which was obtained by transferring the pressure-sensitive adhesive layer A from the release liner to the polarizer-side surface of a polarizing plate obtained in the same manner as in Example 1, a polarizing plate 2 with a pressure-sensitive adhesive layer having the configuration "[TAG protective layer/polarizer (thickness: 29 $\mu$m)/TAC protective layer/acrylic pressure-sensitive adhesive layer]" (manufactured by Nitto Denko Corporation, product name: "TEG1465DU"), and the polarizing film laminates of Examples 7 and 8, and Comparative Example 3 were each cut to a size of 10 cm×10 cm to produce an evaluation sample. The evaluation sample was placed on a smooth glass plate with its pressure-sensitive adhesive layer-side surface directed upward, and was measured for its initial curl value. Then, about 1.0 mL of a liquid for film attachment (aqueous solution obtained by diluting a concentrate for film attachment (product name: "FILM-ON") with water 200-fold) was sprayed to uniformly wet the entirety of the pressure-sensitive adhesive layer surface, and curl values were measured immediately after the spraying and after a lapse of 15 minutes. The maximum value of the upper surface position (height) of the evaluation sample with reference to the glass surface was defined as the curl value. A curl value in the case where the pressure-sensitive adhesive layer surface became a convex surface was expressed as a positive (+) value, and a curl value in the case where the pressure-sensitive adhesive layer surface became a concave surface was expressed as a negative (-) value. The measurement was performed for N=3, and the average of the resultant curl values is shown in Table 2.

Table 2

| | | Polarizing plate with pressure-sensitive adhesive layer | | Example | | Comparative Example |
|---|---|---|---|---|---|---|
| | | 1 | 2 | 7 | 8 | 3 |
| Curl value (mm) | Initial | -20 | -5 | -2 | -2 | -2 |
| | Immediately after spraying | -15 | -2 | -1 | -1 | -1 |
| | After 15 minutes | -50 | 35 | -8 | 10 | -6 |

As apparent from Table 2, the polarizing plates 1 and 2 with pressure-sensitive adhesive layers not including the supporting substrate and the second pressure-sensitive adhesive layer each have a large curl at the time of contact between the pressure-sensitive adhesive layer surface and water. Accordingly, a curl may occur at the time of wet application attachment to reduce workability. On the other hand, it is found that the polarizing film laminates each having a configuration in which a polarizing plate with a pressure-sensitive adhesive layer is provided with the supporting substrate and the second pressure-sensitive adhesive layer are suppressed from curling at the time of contact between the pressure-sensitive adhesive layer surface and water, and hence have suitability for wet application attachment. In addition, such effect can be more suitably obtained as the water absorption ratio of the supporting substrate becomes lower.

The polarizing film laminate of the present invention is suitably used as, for example, an indoor privacy protection film.

According to at least one embodiment of the present invention, the polarizing film laminate includes the supporting substrate, and the pressure-sensitive adhesive strength of the second pressure-sensitive adhesive layer surface thereof falls within a specific range. Thus, after being bonded to an adherend, the polarizing film laminate can be easily peeled off, and can also be bonded again, and hence can be reworked. In addition, the occurrence of floating and peeling over time can be prevented.

Many other modifications will be apparent to and be readily practiced by those skilled in the art without departing from the scope and spirit of the invention. It should therefore be understood that the scope of the appended claims is not intended to be limited by the details of the description but should rather be broadly construed.

**Claims**

1.  A polarizing film laminate, comprising:

     a polarizing plate including a polarizer;
     a first pressure-sensitive adhesive layer;
     a supporting substrate; and
     a second pressure-sensitive adhesive layer,
     which are laminated in the stated order,
     wherein a second pressure-sensitive adhesive layer surface of the polarizing film laminate has a pressure-sensitive adhesive strength to glass of 1.0 N/25 mm or more at a peel angle of 90° and a peel rate of 300 mm/min.

2.  The polarizing film laminate according to claim 1, wherein the supporting substrate has a water absorption ratio of 5.0% or less.

3.  The polarizing film laminate according to claim 1, wherein, when water is applied to the second pressure-sensitive adhesive layer surface and/or a surface of a glass plate serving as an adherend, and the polarizing film laminate is pressure-bonded to the glass plate while the water interposed between the second pressure-sensitive adhesive layer and the glass plate is pushed out of an interface therebetween, the second pressure-sensitive adhesive layer surface has a pressure-sensitive adhesive strength to glass of from 0.2 N/25 mm to 5.0 N/25 mm at a peel angle of 90° and a peel rate of 300 mm/min after 4 days from the pressure-bonding.

4.  The polarizing film laminate according to claim 1, wherein the polarizing plate further includes a protective layer arranged on at least one side of the polarizer.

5.  The polarizing film laminate according to claim 1, wherein the supporting substrate includes a substrate main body and a functional layer arranged on at least one side thereof.

6.  The polarizing film laminate according to claim 5, wherein the functional layer is at least one kind of layer selected from an antistatic layer and an antifouling layer.

7.  The polarizing film laminate according to claim 1, wherein a thickness from the polarizing plate to the second pressure-sensitive adhesive layer is from 50 um to 500 $\mu$m.

8.  The polarizing film laminate according to claim 1, further comprising a release liner laminated on an opposite side of the second pressure-sensitive adhesive layer to a side on which the supporting substrate is arranged.

9.  A transparent barrier configured to divide a space having placed therein an image display apparatus configured to emit linearly polarized light from a display screen, the barrier having bonded thereto the polarizing film laminate of any one of claims 1 to 7 via the second pressure-sensitive adhesive layer so that an absorption axis of the polarizer is substantially parallel to a vibration direction of the linearly polarized light to be emitted by the image display apparatus.

10. The barrier according to claim 9, wherein the barrier is a window, a wall, a door, or a partition.

FIG. 1A

<u>100a</u>

FIG. 1B

<u>100b</u>

FIG. 2A

30a

FIRST PRESSURE-SENSITIVE ADHESIVE LAYER SIDE

— 34
— 32

SECOND PRESSURE-SENSITIVE ADHESIVE LAYER SIDE

FIG. 2B

30b

FIRST PRESSURE-SENSITIVE ADHESIVE LAYER SIDE

— 32
— 34

SECOND PRESSURE-SENSITIVE ADHESIVE LAYER SIDE

FIG. 2C

<u>30c</u>

FIRST PRESSURE-SENSITIVE ADHESIVE LAYER SIDE

34b
34a
32

SECOND PRESSURE-SENSITIVE ADHESIVE LAYER SIDE

FIG. 3

Europäisches Patentamt

European Patent Office

Office européen des brevets

# EUROPEAN SEARCH REPORT

**Application Number**

EP 23 15 2625

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | EP 4 187 290 A1 (NITTO DENKO CORP [JP]) 31 May 2023 (2023-05-31) * the whole document * | 1-10 | INV. G02B5/30 |
| X | US 2005/117217 A1 (YAMAOKA TAKASHI [JP] ET AL) 2 June 2005 (2005-06-02) * paragraphs [0014], [0016], [0036] – [0038], [0123], [0129], [0141], [0157], [0158]; figure 1 * | 1-10 | |
| X | JP 2019 045834 A (DAINIPPON PRINTING CO LTD) 22 March 2019 (2019-03-22) * the whole document * | 1-10 | |
| A | US 2020/032114 A1 (KIMURA TOMOYUKI [JP] ET AL) 30 January 2020 (2020-01-30) * paragraphs [0150], [0151] * | 1 | |
| A | EP 2 055 755 A1 (NITTO DENKO CORP [JP]) 6 May 2009 (2009-05-06) * paragraphs [0079] – [0081] * | 1 | **TECHNICAL FIELDS SEARCHED (IPC)** |
| A | WO 2021/200723 A1 (NITTO DENKO CORP [JP]) 7 October 2021 (2021-10-07) * paragraphs [0030] – [0044]; figures 1A, 1B, 3A * | 9,10 | G02B C08J C09J |

The present search report has been drawn up for all claims

| Place of search | Date of completion of the search | Examiner |
|---|---|---|
| Munich | 5 June 2023 | Zwerger, Markus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 2625

This annex lists the patent family members relating to the patent documents cited in the above-mentioned European search report.
The members are as contained in the European Patent Office EDP file on
The European Patent Office is in no way liable for these particulars which are merely given for the purpose of information.

05-06-2023

| Patent document cited in search report | | | Publication date | Patent family member(s) | | | Publication date |
|---|---|---|---|---|---|---|---|
| EP | 4187290 | A1 | 31-05-2023 | CN | 116134350 | A | 16-05-2023 |
| | | | | EP | 4187290 | A1 | 31-05-2023 |
| | | | | JP | WO2022019258 | A1 | 27-01-2022 |
| | | | | KR | 20230038663 | A | 21-03-2023 |
| | | | | WO | 2022019258 | A1 | 27-01-2022 |
| US | 2005117217 | A1 | 02-06-2005 | CN | 1662832 | A | 31-08-2005 |
| | | | | JP | 2004078171 | A | 11-03-2004 |
| | | | | KR | 20050019709 | A | 03-03-2005 |
| | | | | US | 2005117217 | A1 | 02-06-2005 |
| | | | | WO | 03107049 | A1 | 24-12-2003 |
| JP | 2019045834 | A | 22-03-2019 | NONE | | | |
| US | 2020032114 | A1 | 30-01-2020 | CN | 109790422 | A | 21-05-2019 |
| | | | | CN | 115305036 | A | 08-11-2022 |
| | | | | JP | 6916196 | B2 | 11-08-2021 |
| | | | | JP | WO2018062288 | A1 | 18-07-2019 |
| | | | | KR | 20190055208 | A | 22-05-2019 |
| | | | | KR | 20220088806 | A | 28-06-2022 |
| | | | | TW | 201821576 | A | 16-06-2018 |
| | | | | US | 2020032114 | A1 | 30-01-2020 |
| | | | | US | 2020239743 | A1 | 30-07-2020 |
| | | | | WO | 2018062288 | A1 | 05-04-2018 |
| EP | 2055755 | A1 | 06-05-2009 | CN | 101423736 | A | 06-05-2009 |
| | | | | EP | 2055755 | A1 | 06-05-2009 |
| | | | | JP | 5871297 | B2 | 01-03-2016 |
| | | | | JP | 2009132876 | A | 18-06-2009 |
| | | | | KR | 20090045874 | A | 08-05-2009 |
| | | | | KR | 20120022688 | A | 12-03-2012 |
| | | | | TW | 200927865 | A | 01-07-2009 |
| | | | | US | 2009116111 | A1 | 07-05-2009 |
| WO | 2021200723 | A1 | 07-10-2021 | CN | 115362395 | A | 18-11-2022 |
| | | | | EP | 4130814 | A1 | 08-02-2023 |
| | | | | JP | WO2021200723 | A1 | 07-10-2021 |
| | | | | US | 2023131221 | A1 | 27-04-2023 |
| | | | | WO | 2021200723 | A1 | 07-10-2021 |

EPO FORM P0459

For more details about this annex : see Official Journal of the European Patent Office, No. 12/82

**EP 4 215 959 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022007668 A
- JP 2022182709 A
- JP 2012073580 A
- JP 2001343529 A
- WO 0137007 A1
- JP 2016157077 A
- JP 2016190996 A

**Non-patent literature cited in the description**

- General Catalog. Kurogane Kosakusho Ltd, 2020, vol. 45, 110